# EUROPEAN PATENT SPECIFICATION

(11) **EP 3 958 379 B1**
(45) Date of publication and mention of the grant of the patent: **22.05.2024**
(21) Application number: 21795491.6
(22) Date of filing: 09.03.2021
(51) Int. Cl.: H01M 50/20, H01M 50/24

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 29.04.2020 KR 20200052265
(43) Date of publication of application: 23.02.2022
(73) Proprietor: LG Energy Solution, Ltd., Seoul 07335 (KR)
(72) Inventor: LEE, Changhun, Daejeon 34122 (KR); SEONG, Junyeob, Daejeon 34122 (KR); CHOI, Jonghwa, Daejeon 34122 (KR); KIM, Min Seop, Daejeon 34122 (KR)
(74) Representative: Plasseraud IP
(86) International application number: PCT/KR2021/002932
(87) International publication number: WO 2021/221300

(56) References cited:
- EP-A1- 2 816 632
- EP-A1- 2 911 233
- EP-A1- 3 136 497
- EP-A1- 3 282 515
- EP-A1- 3 573 129
- CN-A- 105 552 475
- JP-A- 2016 131 155
- JP-A- 2018 063 887
- KR-A- 20200 008 624
- KR-B1- 100 648 732

## Description

### [TECHNICAL FIELD]

The present disclosure relates to a battery module and a battery pack including the same, and more specifically, to a battery module having an improved assembling property and a battery pack including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, rechargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is an increasing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., battery case, which seals and houses the electrode assembly together with an electrolyte.

Generally, the lithium secondary battery may be classified based on the shape of the exterior material into a can-type secondary battery in which the electrode assembly is built in a metal can, and a pouch-type secondary battery in which the electrode assembly is built in a pouch of an aluminum laminate sheet.

In the case of a secondary battery used for a small-sized device, two to three battery cells are arranged, but in the case of a secondary battery used for a medium to large-sized device such as an automobile, a battery module in which a large number of battery cells are electrically connected is used. In such a battery module, a plurality of battery cells are connected to each other in series or parallel to form a cell stack, thereby improving capacity and output. In addition, one or more battery modules may be mounted together with various control and protection systems such as a battery management system (BMS) and a cooling system to form a battery pack.

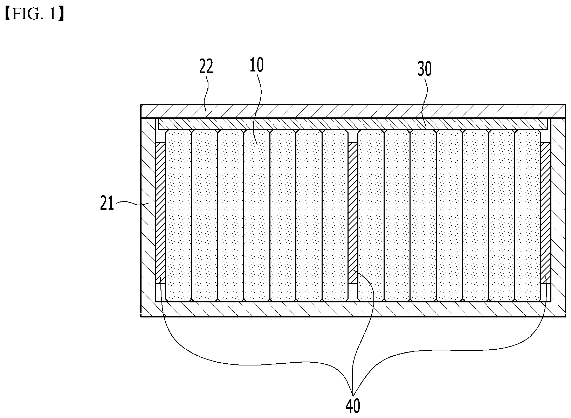

FIG. 1 is a cross-sectional view of a conventional battery module.

Referring to FIG. 1, the conventional battery module is configured such that a plurality of battery cells 10 are stacked to form a battery cell stack, and the battery cell stack is housed in a lower frame 21 and an upper plate 22 for covering the open upper portions of the lower frame 21. At this time, an insulating film 30 for insulation is attached to the lower surface portion of the upper plate 22, and a compression pad 40 is attached between the plurality of battery cells 10 of the battery cell stack.

However, if the number of stacked battery cells 10 increases, precise assembly of the battery cells may be difficult, and even after assembly of the battery cells is completed, there is a concern that as the number of battery cells increases, the length of the battery module becomes longer, which may cause a sagging phenomenon of the battery module.

EP 2 816 632 discloses an energy storage apparatus including one or more energy storage devices housed in an outer housing

### [DETAILED DESCRIPTION OF THE INVENTION]

### [Technical Problem]

Embodiments of the present disclosure has been designed to solve the above-mentioned problems, and an object of the present disclosure is to provide a battery module that prevents its sagging and improves the assembling properties, and a battery pack including the same.

However, the problem to be solved by embodiments of the present disclosure is not limited to the above-described problems, and can be variously expanded within the scope of the technical idea included in the present disclosure.

### [Technical Solution]

The battery module and battery pack of the invention is given in the claims.

A battery module according to one embodiment of the present disclosure includes: a battery cell stack in which a plurality of battery cells are stacked; a lower frame for housing the battery cell stack; and an upper plate for covering the upper side of the lower frame, wherein at least one partition wall is formed between the plurality of battery cells of the battery cell stack, and an insulating member is attached to at least one surface of the partition wall
wherein the partition wall is integrally formed with:
- the lower surface portion of the upper plate, or
- the bottom surface of the lower frame.

The partition wall may be formed between the plurality of battery cells and on both side surfaces of the battery cell stack.

The insulating member may be attached to the lower surface portion of the upper plate.

The insulating member may be formed of an insulating film.

The partition wall is formed of a plurality of walls, and the plurality of partition walls are arranged at regular intervals.

The battery module may further include a thermally conductive resin layer formed between the battery cell stack and the bottom portion of the lower frame, and the thermally conductive resin layer may be formed between the partition walls.

The battery module may further include end plates covering the front and rear surfaces of the battery cell stack.

A battery pack according to another embodiment of the present disclosure includes the above-mentioned battery module.

### [ADVANTAGEOUS EFFECTS]

According to the embodiments of the present disclosure, through the partition wall structure, sagging of the battery module can be prevented and assembling properties can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a cross-sectional view of a conventional battery module.
FIG. 2 is a perspective view showing a battery module according to one embodiment of the present disclosure.
FIG. 3 is an exploded perspective view of the battery module of FIG. 2 according to one embodiment of the present disclosure.
FIG. 4 is a schematic diagram showing the main configuration of a cross section taken along the cutting line A-A' of FIG. 2.
FIG. 5 is an exploded perspective view of the battery module of FIG. 3 according to a modified embodiment of the present disclosure.
FIG. 6 is an exploded perspective view of the battery module of FIG. 3 according to a modified embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

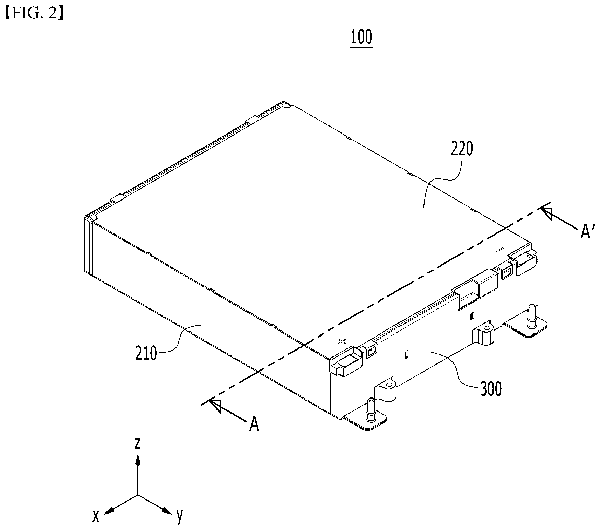

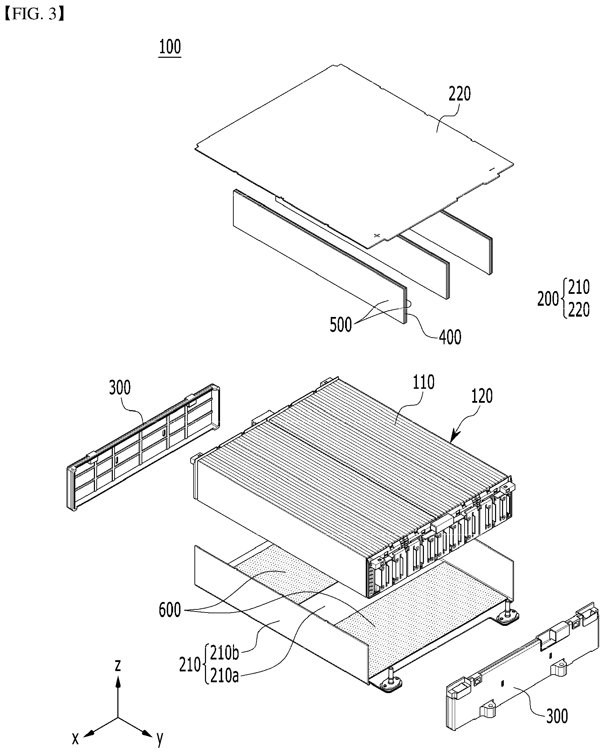

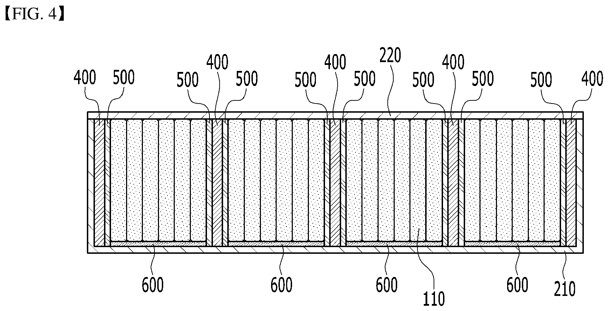

FIG. 2 is a perspective view showing a battery module according to one embodiment of the present disclosure. FIG. 3 is an exploded perspective view of the battery module of FIG. 2 according to one embodiment of the present disclosure. FIG. 4 is a schematic diagram showing the main configuration of a cross section taken along the cutting line A-A' of FIG. 2.

Referring to FIGS. 2 to 4, the battery module 100 according to one embodiment of the present disclosure includes a battery cell stack 120 in which a plurality of battery cells 110 are stacked, and a module frame 200 for housing the battery cell stack 120. A heat sink may be located under the bottom portion 210a of the module frame 200.

First, the battery cell 110 may be a pouch-type battery cell. Such a pouch-type battery cell may be formed by mounting an electrode assembly in a pouch case of a laminate sheet containing a resin layer and a metal layer, and then heat-sealing the sealing portion of the pouch case. At this time, the battery cell 110 may be formed in a rectangular sheet-like structure.

These battery cells 110 may be composed of a plurality of cells, and the plurality of battery cells 110 are stacked to be electrically connected to each other, thereby forming a battery cell stack 120. In particular, as shown in FIG. 3, a plurality of battery cells 110 may be stacked along a direction parallel to the x-axis.

The module frame 200 for housing the battery cell stack 120 includes an upper plate 220 and a lower frame 210. The lower frame 210 may include a bottom portion 210a and two side portions 210b extending upward from both ends of the bottom portion 210a. The bottom part 210a may cover the lower surface of the battery cell stack 120, and the side surface portions 210b may cover both side surfaces of the battery cell stack 120.

The upper plate 220 may be formed in a single plate-shaped structure that surrounds the remaining upper surface (z-axis direction) excluding the lower surface and the both side surfaces covered by the lower frame 210. The upper plate 220 and the lower frame 210 are coupled by welding or the like in a state in which the corresponding edger portions are in contact with each other, thereby forming a structure that covers the battery cell stack 120 vertically and horizontally. The battery cell stack 120 may be physically protected through the upper plate 220 and the lower frame 210. For this purpose, the upper plate 220 and the lower frame 210 may include a metal material having a predetermined strength.

Meanwhile, although not specifically shown, the module frame 200 according to the modified embodiment may be a mono frame in the form of a metal plate in which the upper surface, the lower surface, and both sides are integrated. That is, the mono frame may not have a structure in which the lower frame 210 and the upper plate 220 are coupled to each other, but may have a structure in which the upper surface, the lower surface, and both sides are integrated by being formed by extrusion molding.

The end plate 300 may be formed so as to cover the battery cell stack 120 by being located on both open sides (y-axis direction) corresponding to each other of the module frame 200. The end plate 300 may physically protect the battery cell stack 120 and other electronic products from external impact.

Meanwhile, although not specifically shown, between the battery cell stack 120 and the end plate 300, a bus bar frame on which a bus bar is mounted and an insulating cover for electrical insulation may be located.

According to this embodiment, at least one partition wall 400 is formed between the plurality of battery cells of the battery cell stack 120, and an insulating member 500 is attached to at least one surface of the partition wall 400.

Conventionally, as shown in FIG. 1, compression pads 40 are formed between the battery cells to absorb the swelling of the battery cell stack. The conventional battery module includes 12 to 24 battery cells in one battery module and thus, the width of the battery module is narrow, whereas the battery module 100 according to the present embodiments is a large-area module including about 32 to 48 battery cells per one module, and the width of the battery module is formed to be relatively wider. When the number of battery cells stacked as in the battery module 100 according to the present embodiment is large, precise stacking of the battery cells may be difficult, and when the width of the battery module is widened, a sagging phenomenon of the battery module may occur.

Thus, according to this embodiment, at least one partition wall 400 can be formed between the stacked battery cells 110 as shown in FIG. 4. Thereby, through the partition wall 400, the swelling phenomenon of the battery cells 110 is prevented and at the same time, the assembling property according to the number of stacked battery cells divided into the partition wall 400 can be improved, and partial sagging phenomenon of the battery module 100 can be prevented through the rigidity of the partition wall 400. Further, by attaching the insulating member 500 to at least one surface of the partition wall 400, the insulating performance of the battery module 100 may be secured.

Referring to FIG. 4, the insulating member 500 may be attached to the lower surface of the upper plate 220. Thereby, it is possible to secure an insulating function between the battery cell stack and the upper plate 220. According to this embodiment, the insulating member 500 may be formed of an insulating film, but is not limited thereto, and insulating performance of the battery module may be secured by using various insulating members.

According to this embodiment, the partition wall 400 may be formed of a plurality of walls, and the plurality of partition walls 400 can be arranged at regular intervals. A certain number of stacked battery cells 110 can be inserted between the partition walls 400 and the partition walls 400.

Referring to FIGS. 3 and 4, a thermally conductive resin layer 600 including a thermal resin is formed between the battery cell stack 120 and the bottom portion 210a of the lower frame 210. The thermally conductive resin layer 600 may be formed by applying a thermal resin to the bottom portion 210a, and curing the applied thermally conductive resin.

The thermally conductive resin may include a thermally conductive adhesive material, Specifically, it may include at least one of a silicone material, a urethan material, and an acrylic material. The thermally conductive resin is liquid when applied, but is cured after application, thereby performing the role of fixing one or more battery cells 110 constituting the battery cell stack 120. Further, the thermally conductive resin has excellent thermal conductivity properties and can quickly transfer heat generated from the battery cell 110 to the lower side of the battery module.

As shown in FIG. 4, the thermally conductive resin layer 600 may be formed between the partition walls 400. The thermally conductive resin layer 600 may be formed by applying a thermally conductive resin to the bottom portions 210a appearing between the partition walls 400.

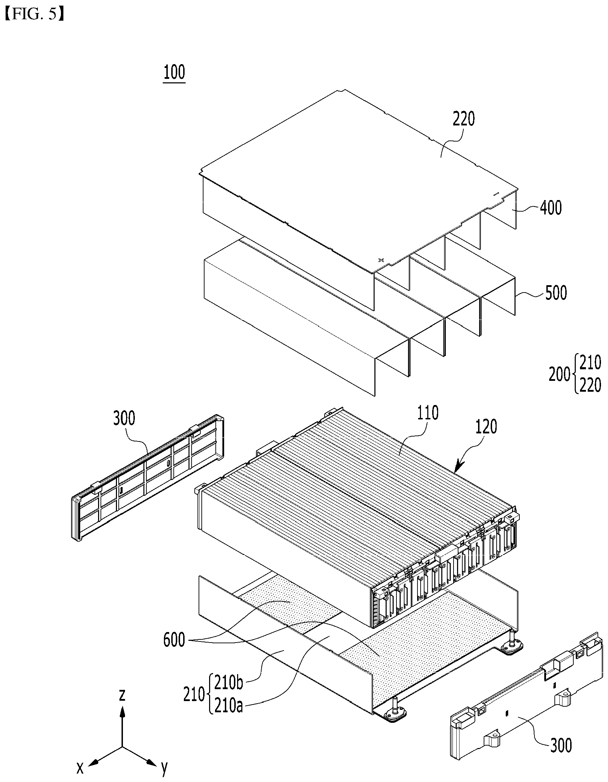

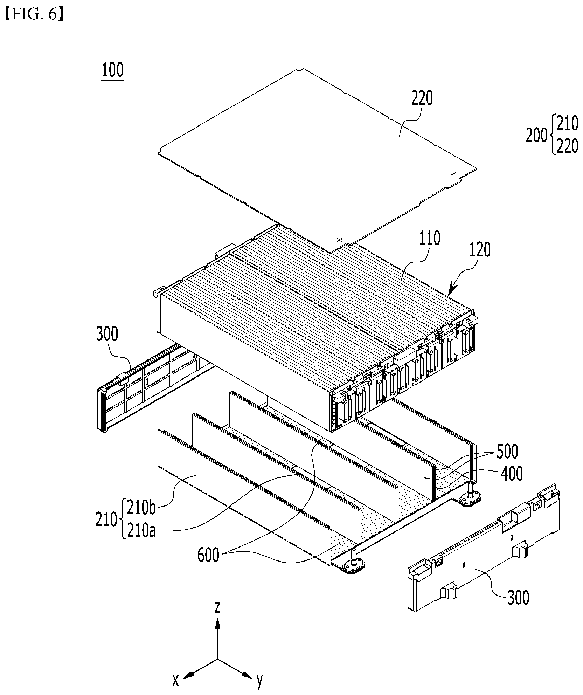

Hereinafter, the battery module according to a modified embodiment of the present disclosure will be described with reference to FIGS. 5 and 6. In the battery module according to the modified embodiment of the present disclosure, the contents other than the description of the modified embodiment described later are the same as described above.

FIG. 5 is an exploded perspective view of the battery module of FIG. 3 according to a modified embodiment of the present disclosure. FIG. 6 is an exploded perspective view of the battery module of FIG. 3 according to a modified embodiment of the present disclosure.

Referring to FIG. 5, in the battery module according to the modified embodiment of the present disclosure, the partition wall 400 is integrally formed with the lower surface of the upper plate 220. In this case, the partition wall 400 may be formed between the plurality of battery cells 110 and on both side surfaces of the battery cell stack 120. The insulating film 500 may be formed on both side surfaces of the partition wall 400 and on the lower surface of the upper plate 220. The partition wall 400 is integrally formed with the upper plate 220, so that the assembly process can be simplified and the assembling properties can be improved.

Referring to FIG. 6, in the battery module according to the modified embodiment of the present disclosure, the partition wall 400 is, alternatively, integrally formed with the bottom surface 210a of the lower frame 210. In this case, the insulating film 500 may be formed on both side surfaces of the partition wall 400. The partition wall 400 is integrally formed with the lower frame 210, so that the assembly process can be simplified and the assembling property can be improved.

The battery pack according to embodiments of the present disclosure may have a structure in the form of a packed by adding a battery management system (BMS) and a cooling device that control and manage battery's temperature, voltage, etc.

The above-mentioned battery module or the battery pack including the same can be applied to various devices. These devices may be applied to transportation means such as an electric bicycle, an electric vehicle, a hybrid vehicle, but the present disclosure is not limited thereto and can be applied to various devices that can use the battery module or the battery pack including the same.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [Description of Reference Numerals]

210: lower frame
210a: lower frame bottom portion
210b: lower frame side surface portion
220: upper plate
400: partition wall
500: insulating member
600: thermally conductive resin layer

## Claims

1. A battery module (100) comprising:
a battery cell stack (120) in which a plurality of battery cells (110) are stacked;
a lower frame (210) for housing the battery cell stack (120);
and an upper plate (220) for covering the upper side of the lower frame (210),
wherein at least one partition wall (400) is formed between the plurality of battery cells (110) of the battery cell stack (120), and
an insulating member (500) is attached to at least one surface of the partition wall (400), wherein the partition wall (400) is integrally formed with
- the lower surface portion of the upper plate (220), or
- the bottom surface (210a) of the lower frame (210).

2. The battery module (100) according to claim 1,
wherein the partition wall (400) is formed between the plurality of battery cells (110) and on both side surfaces of the battery cell stack (120).

3. The battery module (100) according to claim 1,
wherein the insulating member (500) is attached to the lower surface portion of the upper plate (220).

4. The battery module (100) according to claim 1,
wherein the insulating member (500) is formed of an insulating film.

5. The battery module (100) according to claim 1,
wherein the partition wall (400) is formed of a plurality of walls, and the plurality of partition walls (400) are arranged at regular intervals.

6. The battery module (100) according to claim 5,
which further comprises a thermally conductive resin layer (600) formed between the battery cell stack (120) and the bottom portion of the lower frame (210),
wherein the thermally conductive resin layer (600) is formed between the partition walls (400).

7. The battery module (100) according to claim 1,
which further comprises end plates for covering the front and rear surfaces of the battery cell stack (120).

8. A battery pack comprising the battery module (100) according to claim 1.

## Patentansprüche

1. Batteriemodul (100), umfassend:
einen Batteriezellenstapel (120), in welchem eine Mehrzahl von Batteriezellen (110) gestapelt ist;
einen unteren Rahmen (210) zum Aufnehmen des Batteriezellenstapels (120); und
eine obere Platte (220) zum Abdecken der oberen Seite des unteren Rahmens (210),
wobei wenigstens eine Trennwand (400) zwischen der Mehrzahl von Batteriezellen (110) des Batteriezellenstapels (120) gebildet ist, und
ein Isolierelement (500) an wenigstens einer Fläche der Trennwand (400) befestigt ist,
wobei die Trennwand (400) integral gebildet ist, mit
- dem unteren Flächenabschnitt der oberen Platte (220), oder
- der Bodenfläche (210a) des unteren Rahmens (210).

2. Batteriemodul (100) nach Anspruch 1, wobei die Trennwand (400) zwischen der Mehrzahl von Batteriezellen (110) und an beiden Seitenflächen des Batteriezellenstapels (120) gebildet ist.

3. Batteriemodul (100) nach Anspruch 1, wobei das Isolierelement (500) an dem unteren Flächenabschnitt der oberen Platte (220) befestigt ist.

4. Batteriemodul (100) nach Anspruch 1, wobei das Isolierelement (500) aus einem Isolierfilm gebildet ist.

5. Batteriemodul (100) nach Anspruch 1, wobei die Trennwand (400) aus einer Mehrzahl von Trennwänden gebildet ist und die Mehrzahl von Trennwänden (400) in regulären Intervallen angeordnet ist.

6. Batteriemodul (100) nach Anspruch 5, welches ferner eine thermisch leitende Harzschicht (600) umfasst, welche zwischen dem Batteriezellenstapel (120) und dem Bodenabschnitt des unteren Rahmens (210) gebildet ist,
wobei die thermisch leitende Harzschicht (600) zwischen den Trennwänden (400) gebildet ist.

7. Batteriemodul (100) nach Anspruch 1, welches ferner Endplatten zum Abdecken der vorderen und hinteren Flächen des Batteriezellenstapels (120) umfasst.

8. Batteriepack, umfassend das Batteriemodul (100) nach Anspruch 1.

## Revendications

1. Module de batterie (100) comprenant :
un empilement de cellules de batterie (120) dans lequel une pluralité de cellules de batterie (110) sont empilées ;
un cadre inférieur (210) pour loger l'empilement de cellules de batterie (120) ;
et une plaque supérieure (220) pour recouvrir le côté supérieur du cadre inférieur (210),
dans lequel au moins une paroi de séparation (400) est formée entre la pluralité de cellules de batterie (110) de l'empilement de cellules de batterie (120), et
un élément isolant (500) est fixé à au moins une surface de la paroi de séparation (400),
dans lequel la paroi de séparation (400) est formée d'un seul tenant avec
- la partie de surface inférieure de la plaque supérieure (220), ou
- la surface inférieure (210a) du cadre inférieur (210).

2. Module de batterie (100) selon la revendication 1,
dans lequel la paroi de séparation (400) est formée entre la pluralité de cellules de batterie (110) et sur les deux surfaces latérales de l'empilement de cellules de batterie (120).

3. Module de batterie (100) selon la revendication 1,
dans lequel l'élément isolant (500) est fixé à la partie de surface inférieure de la plaque supérieure (220).

4. Module de batterie (100) selon la revendication 1,
dans lequel l'élément isolant (500) est formé d'un film isolant.

5. Module de batterie (100) selon la revendication 1,
dans lequel la paroi de séparation (400) est formée d'une pluralité de parois, et la pluralité de parois de séparation (400) sont agencées à intervalles réguliers.

6. Module de batterie (100) selon la revendication 5,
qui comprend en outre une couche de résine thermoconductrice (600) formée entre l'empilement de cellules de batterie (120) et la partie inférieure du cadre inférieur (210),
dans lequel la couche de résine thermoconductrice (600) est formée entre les parois de séparation (400).

7. Module de batterie (100) selon la revendication 1,
qui comprend en outre des plaques d'extrémité pour recouvrir les surfaces avant et arrière de l'empilement de cellules de batterie (120).

8. Bloc-batterie comprenant le module de batterie (100) selon la revendication 1.
